(19) Europäisches Patentamt

European Patent Office

Office européen des brevets

(11) **EP 0 657 860 B1**

(12) **EUROPEAN PATENT SPECIFICATION**

(45) Date of publication and mention
of the grant of the patent:
**17.11.2004 Bulletin 2004/47**

(51) Int Cl.⁷: **G09G 3/20**, G09G 3/36

(21) Application number: **94203525.4**

(22) Date of filing: **05.12.1994**

(54) **Matrix video display system having a speed-dependent filter to enhance the high spatial frequencies and method of operating such a system**

Matrixtyp-Videosichtgerät mit geschwindigkeitsabhängigem Filter zur Steigerung der hohen Raumfrequenzen und Verfahren zu dessen Betrieb

Affichage vidéo matriciel avec filtre pour l'augmentation des hautes fréquences spatiales dépendant de la vitesse et procédé de fonctionnement correspondant

(84) Designated Contracting States:
**DE FR GB NL**

(30) Priority: **10.12.1993 GB 9325302**

(43) Date of publication of application:
**14.06.1995 Bulletin 1995/24**

(73) Proprietors:
• **PHILIPS ELECTRONICS UK LIMITED Croydon CR9 3QR (GB)**
Designated Contracting States:
**GB**
• **Koninklijke Philips Electronics N.V. 5621 BA Eindhoven (NL)**
Designated Contracting States:
**DE FR NL**

(72) Inventor: **Bitzakidis, Stefan Redhill, Surrey RH1 5HA (GB)**

(74) Representative: **Williamson, Paul Lewis et al Philips Electronics UK Limited Patents and Trade Marks Department Cross Oak Lane Redhill, Surrey RH1 5HA (GB)**

(56) References cited:
**EP-A- 0 484 969          US-A- 5 119 084**

• **DIGEST OF TECHNICAL PAPERS, SOCIETY FOR INFORMATION DISPLAY 1992 INTERNATIONAL SYMPOSIUM, 17-22 MAY 1992, PAGES 601-604, BOSTON US, XP000479094 H. OKAMURA ET AL: "A New Low-Image-Lag Drive Method for Large-Size LCTVs"**
• **PATENT ABSTRACTS OF JAPAN vol. 15, no. 220 (P-1211), 5 June 1991 & JP-A-03 063692 (SHARP CORP.), 19 March 1991,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to matrix display systems, particularly video display systems, for example, for displaying TV pictures, of the kind comprising a display panel, for example a liquid crystal display panel, for displaying moving images and having a row and column array of picture elements which are periodically addressed to produce display outputs and a drive circuit for driving the picture elements according to an applied video signal, the picture elements being driven by addressing the rows in sequence repetitively in successive field periods and holding their display outputs for at least a substantial part of the interval between successive addressing. The invention relates also to methods of operating such display systems.

Video display systems comprising display panels having an array of picture elements, such as liquid crystal elements, for displaying TV pictures, computer graphics, and the like are well known. Larger area display panels commonly include an active switching device, for example a TFT or thin film diode, associated with each picture element to improve display quality. In operation, the display panel is illuminated by a light source and the picture elements serve to modulate the light according to the video information of an applied video signal to produce a display output. The picture elements are connected to row and column address conductors and the rows of picture elements are driven in sequence by scanning the row conductors with selection signals so as to transfer to the respective picture elements video information, data, signals on the column conductors, which are derived by sampling the input video signal. After all rows have been addressed in one field period, this operation is repeated for successive field periods. The scanning, and hence field, frequency is determined by timing signals of the input video signal, and the field rate of the display panel corresponds to that of the supplied video signal. For a PAL TV display, for example, each row of picture element is addressed in a line period of 64 microseconds, or in the interval between successive line periods, which occurs once every 20 milliseconds, corresponding to the field period. In the case particularly of active matrix display panels, then for the interval between successive addressing (corresponding to a field period) the picture elements are effectively isolated so that charge is stored on the picture element, and hence the display effect produced by the picture element substantially maintained, until the element is next addressed in the subsequent field period. Such a matrix liquid crystal display device is an example of a so-called time persistent display device, that is, one which displays an image field for at least a substantial part of the field period when displaying video signals. More particularly, in this display device, the picture elements in a row hold their display outputs for at least a substantial part of the interval, corresponding to a field period, between successive addressing.

Whilst the use of active addressing, using for example TFTs or diodes such as MIMs, and twisted nematic liquid crystal materials has enabled many of the requirements demanded for video displays, for example grey scales, contrast and brightness, to be largely satisfied, there is a need for improvement in the display quality for moving images as found in TV or computer generated graphics, especially with regard to unwanted visual effects in the form of a perceived lack of sharpness, or blurring, which occur when displaying moving images. These effects tend to be particularly noticeable at the sharp edges of objects moving against a stationary background.

It is an object of the present invention to provide an improved matrix display system and method of operating such in which unwanted blurring effects when displaying moving images are reduced.

According to one aspect of the present invention there is provided a matrix video display system as defined in claim 1.

The invention leads to a reduction in the amount of perceived blur in display images involving moving objects, and hence significantly improved display quality, compared with displays provided by conventional matrix display systems employing a time-persistent type of display device. Considering, for example, an LC display system operating at 50Hz (PAL standard) field rate, the field period is 20ms and thus every image field is displayed for the total of the 20ms. The manner in which a viewer perceives the output from such a display device when displaying moving objects differs from that in which a viewer perceives a moving object in the real world, and also from that when viewing moving objects on alternative types of display systems such as those using CRTs. The persistence of the display output from a time-persistent display device results in a deviation from the real world situation which conflicts with the way the eye of a viewer normally attempts to follow moving objects and as a consequence causes motion on the retina of a viewer's eye. The frequency of the residual motion on the retina will be dependent on the given field rate of the display. At frequencies of approximately 50Hz or greater such motion is interpreted by the viewer as blur. This blur is due to averaging performed by the eye on the retina motion and the amount of blur will be proportional to the field to field displacement, i.e. the extent of movement of the displayed moving object from one field to the next. At lower field rates, the resulting lower retina motion frequency is interpreted by the viewer as jutter.

The invention stems in part from the recognition that the blur perceived by a viewer when viewing a time-persistent type of display device such as an LC matrix display device can be modelled as a spatial speed dependent low pass filter. The blurring effects caused to a viewer can then be substantially reduced by using, in accordance with the invention, a spatial speed-dependent high frequency enhancement filter to modify the information content of the video signal supplied to the picture element drive circuit. This modification entails compensation for low passing. For optimum results, the filter characteristic is preferably should be substantially complementary to the low passing action which the eye of a viewer performs when viewing moving images on time persistent displays. In order, therefore, to attempt to achieve this, the frequency response is motion dependent.

According to another aspect of the present invention, there is provided a method of operating a matrix video display system as defined in claim 3.

In US 5119084 A an LC display device is described in which after image effects due to the response time of the LC material being longer then one field period are reduced. This involves using a signal emphasising circuit whose operation is controlled by a motion detector that detects whether or not the pixel movement from one frame to the next is large.

If the pixel movement is large, a multiple of the image data of the preceding frame is subtracted from the image data of the present frame.

EP 0 484 969 A discloses a panel display apparatus wherein digital video signals are provided to a low pass filter which removes the high frequency components according to the spatial frequency characteristic from the digital video signals. The filtered digital video signals are fed to the panel display unit.

The invention is particularly beneficial when applied to an active matrix addressed liquid crystal display system. However, it may be applied to advantageous effect also to some passive matrix LC display systems. In addition, the invention can be applied to other kinds of display systems which similarly exhibit a time persistent type of display output.

A matrix display system, and in particular a liquid crystal video display system, and its method of operation, in accordance with the present invention will now be described, by way of example, with reference to the accompanying drawings, in which:-

Figure 1 is a schematic circuit diagram of an embodiment of an active matrix video liquid crystal display system according to the invention;

Figures 2(A) to 2(D) graphically illustrate for comparison respectively the temporal motion portraying behaviour of the real world, a CRT display, a conventionally-driven active matrix LC display panel, and the temporal behaviour of motion created on the retina of the eye of a viewer viewing a conventionally-driven active matrix LC display panel;

Figure 3A shows for illustrative purposes a typical group of six adjacent picture elements in a display panel of the system of Figure 1 operating to display a moving object.

Figure 3B and 3C graphically illustrate, in relation to Figure 3A, respectively the amplitude/time relationship of the averaging process performed by a viewer's eye in response to such movement, and the amplitude/frequency response of the effective low pass function shown in Figure 3B;

Figure 4 shows diagrammatically an embodiment of a speed dependent high spatial frequency enhancement filter circuit used in the display system of Figure 1;

Figure 5 shows schematically an example of a speed dependent high spatial frequency enhancement filter used in the display system of Figure 1 for enhancing a video signal applied to a matrix display panel of the system of Figure 1; and

Figures 6A to 6D illustrate the effect of this enhancement operation on the video information content of an applied video signal.

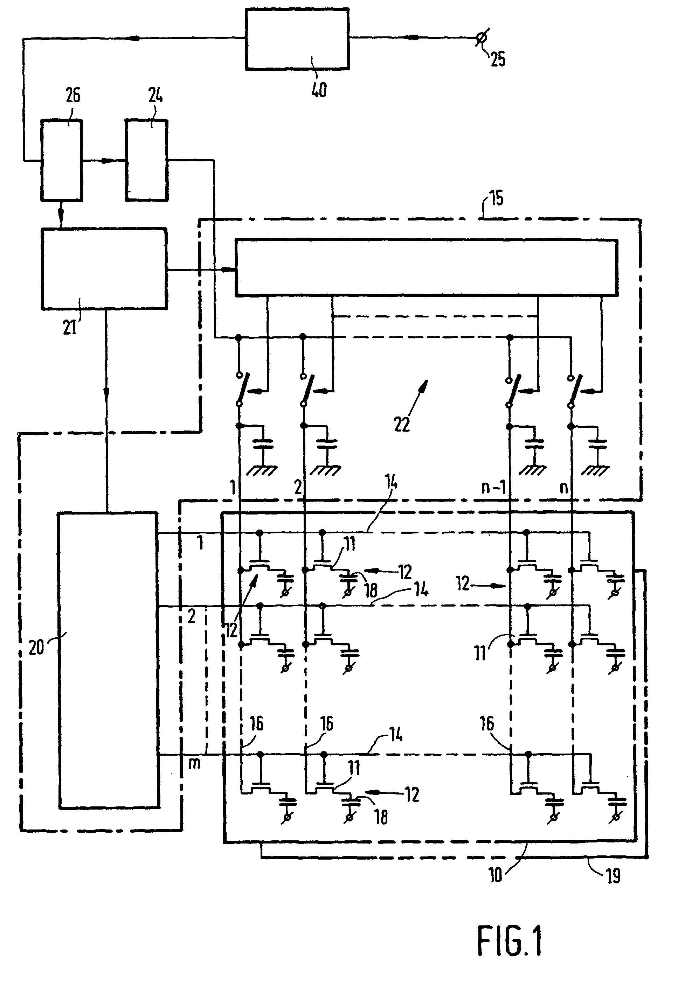

Referring to Figure 1, the display system, which is intended for displaying video, for example TV, pictures, comprises an active matrix addressed liquid crystal display panel 10 having a row and column array of picture elements which consists of m rows with n horizontally arranged picture elements 12 in each row, and a display panel drive circuit, generally referenced at 15, which drives the picture elements of the panel in accordance with an applied video signal. The construction and operation of active matrix display panels and drive circuits therefor suitable for use as video displays are well known and widely documented.

Briefly the display panel 10 comprises a conventional TFT type panel in which each picture element 12 is associated with a respective TFT 11 acting as a switching device and is located adjacent a respective intersection of sets of row and column address conductors 14 and 16. The gate terminals of all TFTs 11 associated with picture elements in the same row are connected to a common row conductor 14 to which, in operation, selection (gating) signals are supplied. Likewise, the source terminals associated with all picture elements in the same column are connected to a common column conductor 16 to which video information (data) signals are applied. The drain terminals of the TFTs are each connected to a respective transparent picture element electrode 18 forming part of, and defining a picture element. The row and column conductors 14 and 16, TFTs 11 and electrodes 18 are all carried on a transparent plate, for example of glass. Parallel to, and spaced from, this plate is a further transparent plate on which is formed a continuous transparent conductive layer constituting an electrode common to all the picture elements of the panel. Twisted nematic liquid crystal material is disposed between the two plates, the two plates being suitably sealed around their periphery. The opposing plates are provided with respective polariser layers in conventional manner.

The panel 10 could instead by of a known kind using two terminal non-linear devices such as diodes or MIMs as switching devices and in which the sets of row and column address conductors are provided on respective plates.

The display panel 10 is illuminated by a light source 19, for example, a compact low-pressure fluorescent lamp, disposed on one side, and light entering the panel from the light source is duly modulated according to the transmission characteristics of the picture elements 12 to produce a visible display output at the other side of the panel. The liquid crystal material modulates light transmitted through the picture elements according to the voltage applied thereacross, with each picture element being operable to vary light transmission through the panel in accordance with a drive voltage applied across its respective electrodes and determined by the applied video signal. Following standard practice the panel is driven on a row at a time basis by scanning the row conductors 14 sequentially with a selection signal so as to turn on each row of TFTs in turn and applying data signals to the column conductors for each row of picture elements in turn as appropriate and in synchronism with the gating signals so as to build up a complete display image. In the case of a TV display, each row of picture elements is provided with picture information signals of a TV line. Using one row at a time addressing all TFTs 11 of the addressed row are switched on for a row address period determined by the duration of the selection signal during which the picture element capacitances are charged according to the voltage level of the video information signals present on column conductors 16. Thereafter, upon termination of the selection signal, the TFTs 11 of the row are turned off, thereby isolating the picture elements from the conductors 16, and ensuring the applied charge is stored on the picture elements until they are addressed again in a subsequent field period. Addressing of the picture elements in this manner is repeated for successive field periods to produce a succession of display image fields.

The row conductors 14 are supplied successively with identical selection signals by a row driver circuit 20 of the drive circuit 15 comprising a digital shift register controlled by regular timing pulses from a timing and control circuit 21 to which synchronisation signals are supplied from a synchronisation separator 26. These synchronisation signals are derived from a video, e.g. TV, signal containing picture and timing information which is applied to an input 25. Video data, (picture information), signals are supplied to the column conductors 16 from a column driver circuit 22 comprising one or more shift register/sample and hold circuits. The circuit 22 is supplied with video information (data) signals from a conventional video processing circuit 24 and derived from the video signal applied to the input 25. The circuit 24 operates in known manner to provide adjustments for brightness and contrast and, in the case of a colour display, gamma correction. Timing signals derived from synchronisation signals obtained in the synchronisation separator 26 from the timing information of the input video signal are supplied to the circuit 22 by the timing and control circuit 21 in synchronism with row scanning to provide serial to parallel conversion appropriate to the row at a time addressing of the panel 10. The drive circuit 15, comprising the sub-circuits 20, 21, 22, 24 and 26, is of generally conventional form and as such will not be described here in detail. It will be appreciated that a highly simplified form of drive circuit is depicted in Figure 1. Thus, for example, the column driver circuit 22 shown schematically in Figure 1 is of a very basic kind and it should be understood that other types of circuit may be employed as will be apparent to persons skilled in the art. To avoid electrochemical degradation of the LC material, the polarity of the drive signals applied to the picture elements is periodically inverted, in accordance with known practice, using the circuit 24, although the circuit means by which this is achieved has been omitted from Figure 1 for simplicity. This polarity inversion can take place after every complete field of the display panel.

The addressing of the picture elements for TV display thus follows conventional practice with the selection signals being applied to each row conductor in succession in synchronism with TV lines with each selection signal having a duration corresponding to a TV line period, TI, or less, so that, in the case for example of a half resolution PAL standard TV display having a TV line period of 64 microseconds, each row conductor is applied with a selection signal at intervals of 20 milliseconds. With this kind of operation, a time persistent display output is obtained as every image field is displayed for the total of the field period with the picture elements in each row being addressed and then holding their display output for at least a substantial part of the interval until they are next addressed in a subsequent field. For a display panel operating at 50Hz field rate the field period is 20ms and thus every field is displayed for substantially the total of the 20ms.

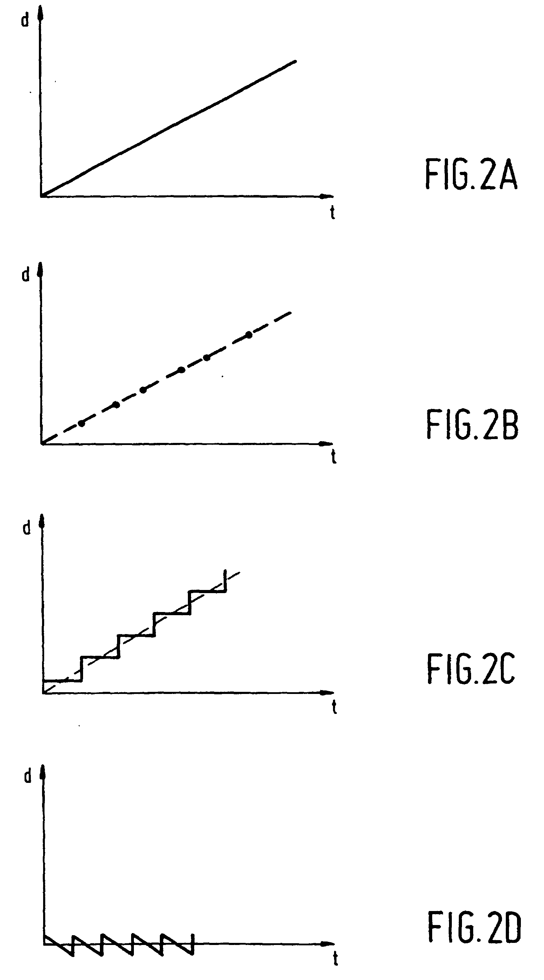

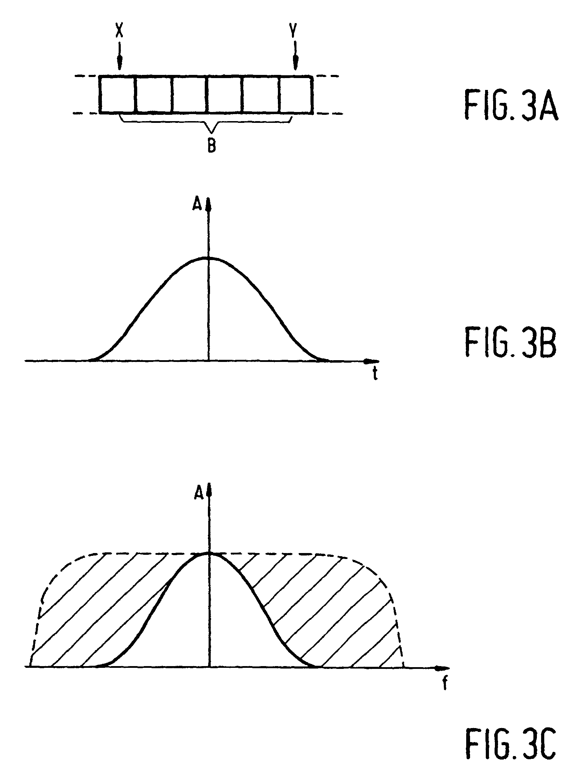

The time-persistent kind of display output obtained from such a display panel leads to a perceptual problem with motion in the display. The eye tracks a moving object in a "linear" way, similar to the way that motion is presented in the real world in which the displacement of the moving object changes continuously in time. Figure 2A shows the time-displacement graph of a constant velocity object in the real world where d and t denote displacement and time respectively. In displays, however, time is quantised and motion is portrayed by the sequential presentation of images at different time instances. The equivalent time-displacement graph for a CRT display displaying the moving object is shown in Figure 2B. Although the CRT display presents samples of the real world (dots) these samples are of comparatively short-lived duration and in the proper time-displacement points i.e. they follow the dotted line which represents the real world. The CRT display is not a time-persistent display. In a time persistent display, the persistence of the display output from the picture elements results in a deviation from the real world case. For comparison with Figures 2A and 2B, Figure 2C illustrates the case for an example time-persistent display such as that obtained by a matrix LC display panel. It can be seen from Figure 2C that a time persistent display has a staircase-like time-displacement presentation. The real world motion is again shown as a dotted line and it is this motion that the eye of a viewer will attempt to track when viewing the panel output. The motion tracking action of the eye aims to keep the moving object stationary at the back of the retina. When the eye attempts to track a moving object in a time-persistent display, the tracking of the eye (straight line/real world) will be different from the motion of the moving object (staircase motion). This difference is depicted in the graph of Figure 2D and is a continuous backwards-forwards motion. The backwards-forwards motion will be present on the eye's retina. If the frequency of this motion is around 50Hz or greater, the viewer will perceive blur as a result of the averaging process performed by the eye on the backwards-forwards retina motion (Figure 2D). It can be appreciated that for a given field rate (of around 50Hz or more (frequency of the backwards-forwards motion) the blur which will be perceived will be proportional to the field to field displacement (the amplitude of the backwards-forwards motion). The larger the displacement, the wider area over which the averaging will be performed. If, for example, a moving object is displaced by 5 picture elements every field (speed of 5ppf), the averaging will be over 6 picture elements, as illustrated by Figure 3A in which six adjacent picture elements are represented by blocks with the position of a moving object being at X in field U and at Y in field U + 1 and in which B represents the area over which a viewer would perceive blur. This averaging is the same as a spatial convolution with an impulse response as shown graphically in Figure 3B in which A and t represent amplitude and time respectively. The exact shape of the convolving function may not necessarily be important. It could, for example, be more rectangular. The low pass characteristics of the convolving function are, however, important and it should be noted that, in relation to Figure 3A, the averaging is performed over the total displacement width. Spatial convolving with a function of the form shown in Figure 3B is spatial low passing. The frequency response of the low pass function is shown in Figure 3C in which amplitude (A) is plotted against frequency (f). The dotted line represents the available video bandwidth (which depends on the video standard used) and so the difference between the two areas enclosed by the dotted and full lines respectively indicate the extent of lost high frequency information. The blur perceived is the result of the spatial low pass which is displacement (and so speed) dependent. When the displacement is large, the averaging will be over more picture elements and so the cut off point of the low pass action will be low. This means a severe loss of high frequency spatial components and thus a lot of blur.

From the foregoing discussion, therefore, it will be appreciated that the blur on time persistent displays can be modelled as a spatial speed dependent low pass filter.

As a result of this understanding, a video signal enhancement circuit comprising a spatial speed dependent high frequency enhancement filter circuit is incorporated in the display system and used to process the input video signal and modify this signal so as to enhance the spatial frequencies of moving components in the image to be displayed according to the speed of the moving components, and thereby compensate for the low passing. Referring again to Figure 1, the enhancement filter circuit in this embodiment is referenced at 40 and is connected between the input 25 and the synchronisation separator 26 so as to process the incoming video signal, or more precisely, the information content of this signal, and supply enhanced video information signals to the column driver circuit 22 of the display drive circuitry 15. The filter ideally should be complementary to the low passing action of the eye and to this end its cut off frequency response is made motion dependent. A fully complementary filter is not practical because the restoration of those certain frequencies which have been attenuated to very low levels, e.g. below noise thresholds, could not realistically be achieved.

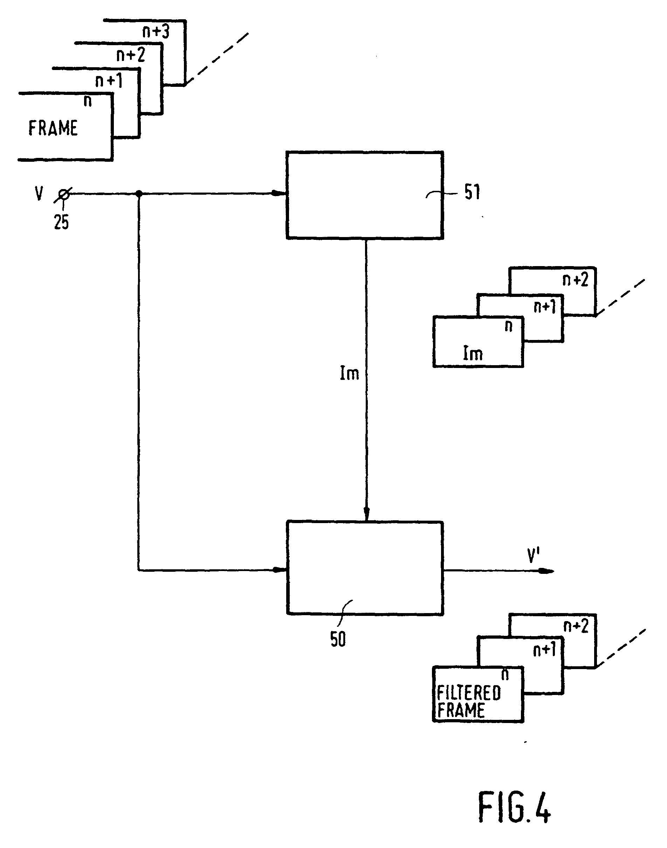

Figure 4 is a schematic diagram illustrating the principles of the operation of the main components of an exemplary circuit 40 in a preferred embodiment. The circuit in this example comprises a digital motion adaptive spatial filter, MASF, circuit 50 which adjusts its frequency characteristics in accordance with movement on the spatial domain. For slow speeds, no high frequency enhancement takes place. As the speed increases, the cut off point of the filter becomes lower and this results in a speed dependent enhancement. Thus, as the speed becomes higher, the point in the frequency spectrum from which enhancement starts becomes lower.

The applied video signal V comprising a succession of fields, n, n + 1, n + 2, etc., of video information is supplied to inputs of the motion adaptive spatial filter 50, and a motion estimator 51. The motion estimator 51 estimates the motion between successive image fields, and thus speed information. Its output is a displacement field for every image field. Assuming an X-Y coordinate system, this displacement field indicates the displacements in the horizontal and vertical positions, $dx$, $dy$, of each pixel, or alternative a block of pixels, from the current field to the next field. Such displacement is one way of providing motion (speed) information. It is expected that the displacement field is as close to the real motion flow as possible. An example of a motion estimator and its operation is described in EP-A-0415491. The motion estimator 51 can operate on a pixel or block basis to provide motion information output for pixels or blocks respectively. Block type motion estimators are more common. If the estimator outputs motion information on a block basis the motion information can be converted to a pixel basis in simple manner if it is assumed that all pixels in the block have the same movement as the block.

In addition to the video information supplied to the MASF circuit 50, this circuit receives the motion information, Im, from the motion estimator 51. The result is that the MASF circuit 50 then has the information about the contents of a pixel, $px,y$, as well as the displacement of the pixel from the current field to the next, $d_px \, d_py$. There are a number of filter types which can be used. The following description concerns one example used experimentally. For ease of understanding the explanation of the circuit's operation will assume a one dimensional motion in the *x* (horizontal) direction so that for a given pixel

$$dx \neq 0, \, dy = 0 \tag{1}$$

The following notation is used for simplicity:

$$n_0 = n_{x,y} \qquad n_1 = n_{x+1,y} \qquad n_2 = n_{x+2,y} \text{ etc.} \tag{2}$$

where $n_{x,y}$ are the contents of the pixel located at *x,y*. A specific filter implementation can be as follows:

$$n'_0 = n_0 + (n_0 - \frac{n_{-(dx-1)/2} +..+ n_0 +..+ n_{(dx-1)/2}}{dx}) \tag{3}$$

In this example, the averaging process of the eye was assumed for simplicity to be such that equal weights were accorded to the contributory picture elements, that is, the amplitude/time relationship depicted in Figure 3B for convenience is considered to be generally rectangular rather than as shown. The new value, $n'_0$, of the pixel at *x,y* is calculated using the formula (3). This filter characteristic enhances high frequencies while at low frequencies its gain is unity. Since *dx* can be an even number then in order to get valid subscripts it is necessary to round it up to the nearest odd number (zero is also considered an even number). Rounding also occurs in order to get an integer value in case the motion estimator supplies displacements to a higher degree of accuracy than just integers.

For example, assume that *dx* = 4. Rounding up then gives *dx* = 5 and therefore for every pixel $n_0$ the following is obtained:

$$n'_0 = n_0 + (n_0 - \frac{n_{-2} + n_{-1} + n_0 + n_1 + n_2}{5}) \tag{4}$$

It should be remembered that this is one dimensional motion along the horizontal, *x*, direction. If a 2D motion is present then, after calculating for the horizontal component of motion, the image would have to be processed for the vertical component of motion in the same way, but now;

$$n_0 = n_{x,y,} \qquad n_1 = n_{x,y+1} \, ..... \qquad n_2 = n_{x,y+2} \, .... \text{ etc.} \tag{5}$$

Also, of course, the filtering operation formula (3) will have *dx* replaced by *dy*.

The filter characteristic shown in equation (3) is a motion adaptive filter. Its specific characteristics depend on the displacement (motion). For a displacement of 0 or 1 then $n'_0$ is equal to $n_0$. Thus for zero or very low speeds no filtering occurs. As the speed increases the enhancement commences from progressively lower spatial frequencies. This happens because the number of negative terms in the addition "spreads" more and more.

The modified video signal, V', comprising a succession of filtered fields, obtained from the circuit 50 is passed to the drive circuit 15 which drives the display panel in accordance therewith.

The above described example of MASF filter is simple and convenient to implement. However, other examples of motion adaptive filters are known per se and can be used instead. Also, it should be appreciated that other kinds of motion estimators providing motion information in different forms, for example, vectors per block rather than vectors per pixel, may be used.

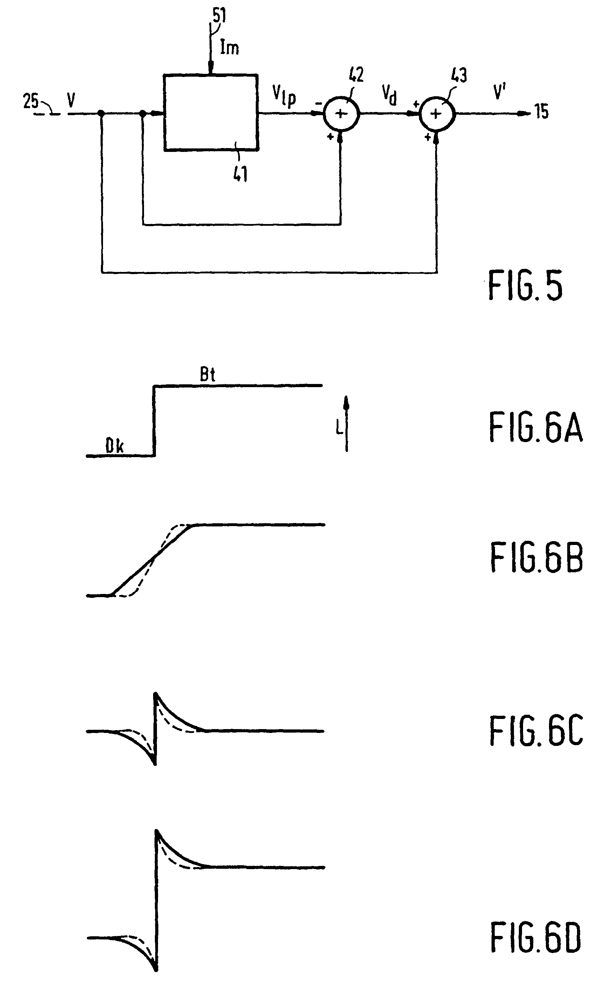

An example circuit configuration of the video signal enhancement circuit 40 for performing the above-described filtering operation is shown schematically in Figure 5. The video signal, V, is supplied to a speed dependent low pass filter circuit 41 having a low pass characteristic similar to that of the eye and to which the image motion information signal, Im, derived from the motion estimator circuit is also applied. The low passing of the eye is simulated to provide a modified signal VIp, and its difference, Vd, from the original signal V is obtained by means of a subtracter circuit 42. This difference signal Vd is then added to the original signal V at the adder circuit 43 where it acts in a form of pre-emphasis to provide an enhanced video signal, indicated at V', which is then applied to the display panel drive circuit 15.

The operation of the circuit 40 and the effect of the obtained enhanced video signal on the display produced will now be described with reference to Figures 6A to 6D. For this purpose, a simple edge of a bright object on a dark background will be considered as an example. Figure 6A illustrates the luminance (L) transition from dark, Dk, to bright, Bt, and shows the one dimensional amplitude of the edge. When the edge moves then the simulated low passing, Vlp, will have an effect as shown in figure 6B. Since the low passing is dependent on speed of movement of the edge the effect achieved will be different for different speeds. The effects for comparatively high and low speeds are illustrated in Figure 6B by the full and the broken likes respectively. The enhancement signal, Vd in Figure 5, is the difference between the signals of Figures 6A and 6B and this difference is depicted in Figure 6C. Again, full and broken lines are used to denote high and low speeds respectively. When the enhancement signal Vd is added back to the original signal, at adder circuit 43 in Figure 5, an enhanced video signal, V', is obtained as shown in Figure 6D to give an enhanced edge. This, in effect, is the image signal which is presented to the viewer of the display panel 10. After the eye of a viewer has performed its spatial speed dependent low passing action, the signal perceived by the viewer will then be similar to the original signal (Figure 6A) before the enhancement procedure, although not identical as the recovery of all the information is not possible.

It is seen, therefore, that the enhancement made to the video signal by the circuit 40 compensates for the speed dependent spatial low passing that the viewer's eye performs on moving images displayed on the panel. As a result, the extent of perceived blurring experienced by a viewer when viewing moving images is considerably reduced.

The effectiveness of the signal enhancement filter circuit is determined by its frequency response characteristic in relation to speed. For low speeds the cut off of the enhancement is selected to be high while for high speeds it is selected to be low. Using a filter circuit with a cut off frequency too low for a given speed results in over enhancement. On the other hand, using a filter circuit with a cut off frequency too high results in under enhancement so that the extent of perceived blurring is virtually unchanged. It is then necessary to have the correct filter characteristic for every speed so that the image is enhanced sufficiently for an improvement to be visible but not so much that the enhancement itself is visible in the form of extreme peaking.

The circuit 40 need not be located between the input 25 and the circuits 26 and 24 as shown in Figure 1 but could instead be connected, for example, between video processing circuit 24 and the column driver circuit 22 of the display panel drive circuit 15.

Although described above in relation to an active matrix addressed LC display device, the method of operation can be applied with similar advantageous effects to passive LC display panels and also other kinds of time persistent display panels, for example, electrochromic and electrophoretic type panels.

The display system may be a projection display system rather than direct view in which case a high intensity projection lamp is employed for the light source.

From reading the present disclosure, other modifications will be apparent to persons skilled in the art. Such modifications may involve other features which are already known in the field of video matrix display systems and which may be used instead of or in addition to features already described herein.

**Claims**

1. A matrix video display system for displaying moving images comprising a matrix display panel (10) having a row and column array of picture elements (12) for producing display outputs and a picture element drive circuit (15) for driving the picture elements (12) according to a video signal (V) comprising fields of video information and applied to an input (25) by addressing the rows of picture elements (12) in sequence in one field period and repetitively addressing the array of picture elements (12) in successive field periods with the picture elements (12) of the array being driven in each field period to provide display outputs in accordance with the video information of the video signal (V) and holding their display outputs for at least a substantial part of the interval between successive addressing, the display outputs of the picture elements (12) of the array addressed in one field period constituting image pixels in a display image produced by the array according to a field of video information of the video signal (V), wherein the system includes a filter circuit (40) through which the video information of the video signal (V) is supplied from said input (25) of the filter circuit (40) to the picture element drive circuit (15), the filter circuit (40) comprising motion estimating means (51) to which the video information of the video signal (V) is supplied, **characterised in that** the filter circuit (40) is a speed-dependent high spatial frequency enhancement filter circuit (40) and the motion estimating means (51) provides a displacement field representing the displacement of image pixels for display images in one field to the next field and an output comprising information (Im) indicative of the speed of movement of image pixels in successive display images and the filter circuit (40) further comprising a speed dependent low pass filter circuit (41) to which the video signal (V) and the output of the motion estimating means (51) is supplied, the speed-dependent low pass filter circuit (41) filtering the video signal (V) and having a cut-off point which becomes lower as the speed of movement of image pixels increases, the high spatial frequency enhancement filter circuit (40) including a subtractor circuit (42) for producing an enhancement signal (Vd) according to the difference between the output (Vlp) of the speed-dependent low pass filter circuit and the video signal (V) and an adder circuit (43) in which the enhancement signal (Vd) is added to the video signal (V) to provide a modified video signal (V') in which the spatial frequencies of moving image pixels in display images are enhanced in accordance with their speed of movement and which is supplied to the picture element drive circuit (15).

2. A matrix video display system according to Claim 1 **characterised in that** the matrix display panel (10) comprises an active matrix liquid crystal display panel.

3. A method of operating a matrix video display system of the kind comprising a matrix display panel (10) having a row and column array of picture elements (12) to display moving images according to a video signal (V) comprising fields of video information, in which method the picture elements (12) in the array are driven in successive field periods to provide display outputs in accordance with the video information of the video signal (V) by repetitively addressing the rows of picture elements in sequence to produce a succession of display images and in which the picture elements (12) hold their display outputs following the addressing for at least a substantial part of a field period, the display outputs of the picture elements (12) of the array addressed in one field period constituting image pixels in a display image produced by thearray according to a field of video information of the video signal (V) wherein the video signal (V) is subjected to a filtering operation (40) prior to being supplied to the picture elements (12) of the matrix display panel (10), **characterised in that** the filtering operation (40) is a speed-dependent high spatial frequency enhancement filtering operation (40) to enhance the spatial frequencies of moving image pixels in the display images according to the speed of movement of image pixels, in which displacement fields representing the displacement of image pixels for display images of one field to the next field are produced and information (Im) indicative of the speed of movement of image pixels in successive display images derived therefrom, in which the video signal (V) is filtered by a speed-dependent low pass filter (41) controlled in accordance with the information (Im) indicative of the speed of movement of image pixels in successive display images such that its cut-off point becomes lower as the speed of the movement of image pixels increases, and in which an enhancement signal (Vd) representative of the difference between the filtered video signal (Vlp), provided by the speed-dependent low pass filter, and the video signal (V) is added to the video signal (V) to provide an enhanced video signal (V') for supply to the picture elements (12).

4. A method according to Claim 3, **characterised in that** the matrix display panel (10) comprises an active matrix liquid crystal display panel.

**Patentansprüche**

1. Matrixtyp-Anzeigesystem zum Anzeigen von Bewegtbildern mit einem Matrix-Anzeigefeld (10) mit Bildelementen (12) in einer Zeilen- und Spaltenanordnung zum Erzeugen von Anzeigeausgaben und mit einer Bildelement-Ansteuerungsschaltung (15) zum Ansteuern der Bildelemente (12) entsprechend einem zugeführten Videosignal (V), das Halbbilder mit Videoinformationen enthält und einem Eingang (25) zugeführt wird, indem die Bildelementzeilen (12) nacheinander in einer Halbbildperiode adressiert werden und die Anordnung der Bildelemente (12) wiederholt in aufeinanderfolgenden Halbbildperioden adressiert wird, wobei die Bildelemente der Anordnung in jeder Halbbildperiode angesteuert werden, um Anzeigeausgaben entsprechend den Videoinformationen des Videosignals (V) zu liefern und ihre Anzeigeausgaben für mindestens einen wesentlichen Teil des Intervalls zwischen aufeinanderfolgenden Adressierungen festzuhalten, wobei die Anzeigeausgaben der in einer Halbbildperiode adressierten Bildelemente (12) der Anordnung Bildpixel in einem durch die Anordnung entsprechend einem Halbbild mit Videoinformationen des Videosignals (V) erzeugten Anzeigebild darstellen, wobei das System eine Filterschaltung (40) enthält, durch die die Videoinformationen des Videosignals (V) von dem genannten Eingang (25) der Filterschaltung (40) der Bildelement-Ansteuerungsschaltung (15) zugeführt werden, wobei die Filterschaltung (40) Bewegungsschätzungsmittel (51) enthält, denen die Videoinformationen des Videosignals (V) zugeführt werden, **dadurch gekennzeichnet, dass** die Filterschaltung (40) eine geschwindigkeitshabhängige Verstärkungsfilterschaltung für hohe Raumfrequenzen (40) ist und die Bewegungsschätzungsmittel (51) ein Verschiebungs-Halbbild, das die Verschiebung der Bildpixel für Anzeigebilder von einem Halbbild zum nächsten Halbbild darstellt, sowie ein Ausgabesignal liefern, das Informationen (Im) enthält, welche einen Hinweis auf die Bewegungsgeschwindigkeit der Bildpixel in aufeinanderfolgenden Anzeigebildern geben, und wobei die Filterschaltung (40) weiterhin eine geschwindigkeitsabhängige Tiefpassfilterschaltung (41) umfasst, der das Videosignal (V) und das Ausgangssignal der Bewegungsschätzungsmittel (51) zugeführt werden, wobei die geschwindigkeitsabhängige Tiefpassfilterschaltung (41), die das Videosignal (V) filtert, einen Grenzpunkt hat, der in dem Maße, wie die Geschwindigkeit der Bildpixelbewegung zunimmt, niedriger wird, und wobei die Verstärkungsfilterschaltung für hohe Raumfrequenzen (40) eine Subtrahierschaltung (42) zum Erzeugen eines Verstärkungssignals (Vd) entsprechend der Differenz zwischen dem Ausgangssignal (Vlp) der geschwindigkeitsabhängigen Tiefpassfilterschaltung und dem Videosignal (V) sowie eine Addierschaltung (43) enthält, in der das Verstärkungssignal (Vd) zu dem Videosignal (V) addiert wird, um ein modifiziertes Videosignal (V') zu liefern, in dem die Raumfrequenzen von sich bewegenden Bildpixeln in Anzeigebildern entsprechend ihrer Bewegungsgeschwindigkeit verstärkt sind und das der Bildelement-Ansteuerungsschaltung (15) zugeführt wird.

2. Matrix-Anzeigesystem nach Anspruch 1, **dadurch gekennzeichnet, dass** das Matrix-Anzeigefeld (10) ein Flüssigkristall-Anzeigefeld mit aktiver Matrix umfasst.

3. Verfahren zum Betrieb eines Matrixtyp-Anzeigesystems der Art, die ein Matrix-Anzeigefeld (10) mit Bildelementen (12) in einer Zeilen- und Spaltenanordnung enthält, um Bewegtbilder entsprechend einem Videosignal (V) anzuzeigen, das Halbbilder mit Videoinformationen enthält, wobei in diesem Verfahren die Bildelemente (12) in der Anordnung in aufeinander folgenden Halbbildperioden angesteuert werden, um Anzeigeausgaben entsprechend den Videoinformationen des Videosignals (V) zu liefern, indem die Bildelementzeilen nacheinander wiederholt adressiert werden, um eine Folge von Anzeigebildern zu erzeugen, und wobei in diesem Verfahren die Bildelemente (12) ihre Anzeigeausgaben nach der Adressierung für mindestens einen wesentlichen Teil einer Halbbildperiode festhalten, wobei die Anzeigeausgaben der in einer Halbbildperiode adressierten Bildelemente (12) der Anordnung Bildpixel in einem durch die Anordnung entsprechend einem Halbbild mit Videoinformationen des Videosignals (V) erzeugten Anzeigebild darstellen, wobei das Videosignal ((V) einer Filteroperation (40) unterzogen wird, bevor es den Bildelementen (12) des Matrix-Anzeigefelds (10) zugeführt wird, **dadurch gekennzeichnet, dass** die Filteroperation (40) eine geschwindigkeitshabhängige Verstärkungsfilteroperation für hohe Raumfrequenzen (40) ist, um die Raumfrequenzen der sich bewegenden Bildpixel in den Anzeigebildern entsprechend der Bewegungsgeschwindigkeit der Anzeigepixel zu verstärken, wobei Verschiebungs-Halbbilder, die die Verschiebung der Bildpixel für Anzeigebilder von einem Halbbild zum nächsten Halbbild darstellen, erzeugt werden und Informationen (Im), welche einen Hinweis auf die Bewegungsgeschwindigkeit der Bildpixel in aufeinanderfolgenden Anzeigebildern geben, daraus abgeleitet werden, und wobei das Videosignal (V) durch einen geschwindigkeitsabhängigen Tiefpassfilter (41) gefiltert wird, der entsprechend den Informationen (Im), die einen Hinweis auf die Bewegungsgeschwindigkeit der Bildpixel in aufeinanderfolgenden Anzeigebildern geben, gesteuert wird, so dass sein Grenzpunkt in dem Maße niedriger wird, wie die Geschwindigkeit der Bildpixelbewegung zunimmt, und wobei ein Verstärkungssignal (Vd), das die Differenz zwischen dem gefilterten Videosignal (Vlp), das von dem geschwindigkeitsabhängigen Tiefpassfilter geliefert wird, und dem Videosignal (V) darstellt, zu dem Videosignal (V) addiert wird, um ein verstärktes Videosignal (V') zu liefern, das den Bildelementen (12) zugeführt wird.

4. Verfahren nach Anspruch 3, **dadurch gekennzeichnet, dass** das Matrix-Anzeigefeld (10) ein Flüssigkristall-Anzeigefeld mit aktiver Matrix umfasst.

## Revendications

1. Système d'affichage vidéo matriciel, destiné à afficher des images animées, comprenant un panneau d'affichage matriciel (10), doté d'un groupement de rangées et de colonnes d'éléments d'image (12) destiné à produire des sorties d'affichage, ainsi qu'un circuit de commande d'éléments d'image (15) destiné à commander des éléments d'image (12) en fonction d'un signal vidéo (V) comprenant des champs d'informations vidéo et appliqué à une entrée (25) en adressant les rangées d'éléments d'image (12) séquentiellement de manière répétitive au cours d'une période de champ et en adressant répétitivement le groupement d'éléments d'image (12) au cours de périodes de champ successives, les éléments d'image (12) du groupement étant commandés au cours de chaque période de champ de manière à fournir des sorties d'affichage en fonction des informations vidéo du signal vidéo (V), et en conservant leurs sorties d'affichage pendant au moins une grande partie de l'intervalle entre les adressages successifs, les sorties des éléments d'image (12) du groupement adressé au cours d'une période de champ formant des pixels d'image dans une image d'affichage produite par le groupement suivant un champ d'informations vidéo du signal vidéo (V), dans lequel le système comprend un circuit de filtre (40) à travers lequel les informations du signal vidéo (V) sont fournies de ladite entrée (25) du circuit de filtre (40) au circuit de commande d'éléments d'image (15), le circuit de filtre (40) comprenant un moyen d'estimation de mouvement (51) auquel les informations vidéo du signal vidéo (V) sont fournies, **caractérisé en ce que** le circuit de filtre (40) est un circuit de filtre d'augmentation des hautes fréquences spatiales dépendant de la vitesse (40), et le moyen d'estimation de mouvement (51) fournit un champ de déplacement représentant le déplacement de pixels d'image pour des images d'affichage d'un champ au champ suivant, ainsi qu'une sortie comprenant des informations (Im) indicatrices de la vitesse de mouvement de pixels d'image dans des images d'affichage successives, et le circuit de filtre (40) comprend en outre un circuit de filtre passe-bas dépendant de la vitesse (41) auquel le signal vidéo (V) et la sortie du moyen d'estimation de mouvement (51) sont fournis, le circuit de filtre passe-bas dépendant de la vitesse (41) filtrant le signal vidéo (V), et présentant un point de coupure qui diminue lorsque la vitesse de mouvement de pixels d'image augmente, le circuit de filtre d'augmentation des hautes fréquences spatiales (40) comprenant un circuit soustracteur (42) destiné à produire un signal d'augmentation (Vd) en fonction de la différence entre la sortie (Vlp) du circuit de filtre passe-bas dépendant de la vitesse et le signal vidéo (V), ainsi qu'un circuit additionneur (43) dans lequel le signal d'augmentation (Vd) est ajouté au signal vidéo (V) afin de fournir un signal vidéo modifié (V') dans lequel les fréquences spatiales de pixels d'images animées dans des images affichées sont augmentées en fonction de leur vitesse de mouvement et sont fournies au circuit de commande d'éléments d'image (15).

**2.** Système d'affichage vidéo matriciel suivant la revendication 1, **caractérisé en ce que** le panneau d'affichage matriciel (10) comprend un panneau d'affichage à cristaux liquides à matrice active.

**3.** Procédé de fonctionnement d'un système d'affichage vidéo matriciel du type comprenant un panneau d'affichage matriciel (10) doté d'un groupement de rangées et de colonnes d'éléments d'image (12), destiné à afficher des images animées en fonction d'un signal vidéo (V) comprenant des champs d'informations vidéo, procédé dans lequel les éléments d'image (12) dans le groupement sont commandés au cours de périodes de champ successives, de manière à fournir des sorties d'affichage en fonction des informations vidéo du signal vidéo (V) en adressant répétitivement les rangées d'éléments d'image séquentiellement afin de produire une succession d'images d'affichage, et dans lequel les éléments d'image (12) conservent leurs sorties d'affichage suite à l'adressage pendant au moins une grande partie d'une période de champ, les sorties d'affichage des éléments d'image (12) du groupement adressé au cours d'une période de champ formant des pixels d'image dans une image d'affichage produite par le groupement en fonction d'un champ d'informations vidéo du signal vidéo (V), dans lequel le signal vidéo (V) est soumis à une opération de filtrage (40) avant d'être fourni aux éléments d'image (12) du panneau d'affichage matriciel (10), **caractérisé en ce que** l'opération de filtrage (40) est une opération de filtrage d'augmentation des hautes fréquences spatiales dépendant de la vitesse (40), afin d'augmenter les fréquences spatiales de pixels d'image animée dans les images d'affichage en fonction de la vitesse de mouvement de pixels d'image, dans lequel les champs de déplacement représentant le déplacement de pixels d'image pour des images d'affichage d'un champ au champ suivant sont produits, et des informations (Im) indicatrices de la vitesse de mouvement de pixels d'image dans des images d'affichage successives sont dérivées de ceux-ci, dans lequel le signal vidéo (V) est filtré par un filtre passe-bas dépendant de la vitesse (41) commandé en fonction des informations (Im) indicatrices de la vitesse de mouvement de pixels d'image dans des images d'affichage successives, de sorte que son point de coupure diminue lorsque la vitesse de mouvement de pixels d'image augmente, et dans lequel un signal d'augmentation (Vd) représentatif de la différence entre le signal vidéo filtré (Vlp), fourni par le filtre passe-bas dépendant de la vitesse, et le signal vidéo (V) est ajouté au signal vidéo (V) afin de fournir un signal vidéo augmenté (V') à fournir aux éléments d'image (12).

**4.** Procédé suivant la revendication 3, **caractérisé en ce que** le panneau d'affichage matriciel (10) comprend un panneau d'affichage à cristaux liquides à matrice active.

FIG.1

FIG.2A

FIG.2B

FIG.2C

FIG.2D

FIG.3A

FIG.3B

FIG.3C

FIG.4

FIG.5

FIG.6A

FIG.6B

FIG.6C

FIG.6D